# EUROPÄISCHE PATENTSCHRIFT

(11) **EP 0 461 232 B1**
(45) Veröffentlichungstag und Bekanntmachung des Hinweises auf die Patenterteilung: **17.09.1997**
(21) Anmeldenummer: 91901588.3
(22) Anmeldetag: 22.12.1990
(51) Int. Cl.: H01B 1/20, H01B 1/24, C09K 3/16, C08K 3/00, C08K 3/04, C08K 3/08, C08L 101/00

(54) **ANTISTATISCH BZW. ELEKTRISCH LEITFÄHIG AUSGERÜSTETE POLYMERE ZUSAMMENSETZUNGEN**
ANTISTATIC OR ELECTRICALLY CONDUCTIVE POLYMER COMPOSITIONS
COMPOSITIONS POLYMERES RENDUES ANTISTATIQUES OU ELECTROCONDUCTRICES

(30) Priorität: 30.12.1989 DE 3943420
(43) Veröffentlichungstag der Anmeldung: 18.12.1991
(73) Patentinhaber: Zipperling Kessler & Co (GmbH & Co), D-22926 Ahrensburg (DE)
(72) Erfinder: WESSLING, Bernhard, D-2072 Bargteheide (DE); MERKLE, Holger, D-2070 Ahrensburg (DE); BLÄTTNER, Susanne, D-2050 Hamburg 80 (DE)
(74) Vertreter: Huber, Arnulf
(86) Internationale Anmeldenummer: EP9002311
(87) Internationale Veröffentlichungsnummer: WO9110237

(56) Entgegenhaltungen:
- EP-A- 0 109 824
- Patent Abstracts of Japan, Band 13, Nr. 275, 23. Juni 1989; & JP-A-1069662

## Beschreibung

Die kunststoffverarbeitende Industrie benötigt zu den verschiedensten Zwecken (z.B. zur Ableitung elektrostatischer Aufladungen, zur Abschirmung elektromagnetischer Felder oder als Elektroden) antistatische bzw. elektrisch leitfähige Modifizierungen konventioneller Polymere.

Als Polymere werden u.a. thermoplastische Polymere verwendet, aber auch duroplastische Polymere und Lacke werden leitfähig ausgerüstet. Zur Ausrüstung verwendet man als leitfähige Stoffe Farbruße und sogenannten "Leitruß" (Ruße mit einer spezifischen Oberfläche von > 80 m²/g), Kohlefasern, metallbeschichtete Glaskugeln, Metallfasern und -flakes; es sind auch bereits Mischungen von konventionellen mit intrinsisch leitfähigen Polymeren bekannt (EP-A-168 620). Solche Mischungen werden häufig auch als "Compounds" oder "Polymerblends" bezeichnet.

Die vorliegende Erfindung betrifft die Optimierung von antistatisch bzw. elektrisch leitfähig ausgerüsteten Polymeren, wobei feinteilige leitfähige Stoffe Verwendung finden. Leitruße und dispergierbare intrinsisch leitfähige Polymere, z.B. die in der EP-A-329 768 beschriebenen, haben den Vorteil, daß bereits bei einem Gehalt von weniger als 20 Vol.%, z.T. sogar deutlich unter 10 Vol.%, die Leitfähigkeit drastisch ansteigt. Dieses Verhalten wird gewöhnlich als "Perkolation" bezeichnet und mit der Perkolationstheorie beschrieben; neuerdings gibt es auch eine Deutung dieses Phänomens als "Flokkulationsprozeß" (vgl. B. Weßling, Mol.Cryst.Liqu. Cryst. 160, 205 (1988) und Synth.Met. 27, A83 (1988)).

Die Optimierung von leitfähig ausgerüsteten Polymeren hat fast immer zum Gegenstand, die Kosten sowie die mechanischen und die Verarbeitungseigenschaften unter Beibehaltung der Leitfähigkeit durch Senkung des Anteils der leitfähigen Zusatzstoffe, also durch Parallel-Verschiebung der "Perkolations"-Kurve (der Auftragung der Leitfähigkeit gegen den Prozentgehalt an leitfähigen Stoffen) zu niedrigeren Gehalten zu verbessern. Hierzu werden in der Literatur verschiedene Vorschläge gemacht:
- Aus der EP-A-109 824 ist es bekannt, die Thermostabilität der Leitfähigkeit von Polymeren mit Gehalt an Ruß durch Zusatz von Graphit oder anorganischen nicht leitenden Stoffen zu verbessern.
- Nach der "Perkolationstheorie" empfiehlt es sich, hochstrukturierte leitfähige Stoffe in den Polymeren zu verteilen (vgl. E. Sichel (Hrsg.) "Carbon Black Polymer Composites", New York, 1982); dies bewährt sich offenbar aber nur bei größeren Teilchen (z.B. bei Fasern).
- Die Konzentration der leitfähigen Stoffe in sogenannten "Leiterbahnen" (GB-A-2 214 511 und EP-A-181 587) hat sich in vielen Fällen bewährt.
- Die Verbesserung der Dispergierbarkeit der leitfähigen Stoffe (EP-AS 329 768) vermag die für den Anstieg der Leitfähigkeit notwendige kritische Konzentration zu niedrigeren Prozentwerten zu verschieben.

Allen Vorschlägen haften aber weiterhin Nachteile an, insbesondere der, daß Materialkostenvorteile oft durch erhöhten Produktionsaufwand aufgehoben werden oder daß die Anwendungsbereiche beschränkt sind. Zwei Beispiele sollen dies illustrieren:
- Das "Leiterbahnen"-Konzept (EP-A-181 587) läßt sich nicht anwenden, wenn - aus welchen Gründen auch immer - reine einphasige Polymere leitfähig eingestellt werden sollen.
- Polymerblends mit intrinsisch leitfähigen Polymeren zeigten bisher häufig den Nachteil unbefriedigender mechanischer Eigenschaften, wenn man steife und/oder wärmeformbeständige Einstellungen benötigt.

Der Erfindung liegt daher die Aufgabe zugrunde, ein Verfahren zu schaffen, das als Alternative und/oder Ergänzung zum "Leiterbahnen-" und zum "Dispersionskonzept" eine weitere Möglichkeit zur Optimierung von antistatisch oder leitfähig modifizierten Polymeren eröffnet.

Gegenstand der Erfindung ist die Verwendung eines feinteiligen nicht-leitenden Stoffes mit einer durchschnittlichen Teilchengröße < 50 µm, welcher unter den Verarbeitungsbedingungen nicht schmelzbar und im Matrixpolymer unlöslich ist, zur Erhöhung der Leitfähigkeit einer antistatisch bzw. leitfähig ausgerüsteten polymeren Zusammensetzung aus mindestens einem nicht leitenden Matrixpolymer und einem elektrisch leitfähigen Zusatzstoff, nämlich Leitruß mit einer BET-Oberfläche > 80 m²/g und/oder einem intrinsisch leitfähigen organischen Polymer in komplexierter Form.

Überraschend wurde festgestellt, daß bei einem gegebenen Anteil an Zusatzstoffen in der Polymermatrix die Leitfähigkeit des Compound deutlich ansteigt, wenn man den feinteiligen (bevorzugte durchschnittliche Teilchengröße ≤ 1 µm) leitfähigen Stoff A mit einem nichtleitfähigen Stoff B, der eine durchschnittliche Teilchengröße < 10 µm aufweist, kombiniert.

Überraschend ist der Effekt, daß bei einem bestimmten Gehalt an Stoff A durch Zugabe von Stoff B die Leitfähigkeit steigt, obwohl Stoff B nichtleitend ist. Der Effekt ist in manchen Fällen so ausgeprägt, daß bei einer Konzentration des Stoffes A unterhalb der kritischen Schwelle des Leitfähigkeitssprunges (unterhalb des Perkolationspunktes) praktisch noch keine Leitfähigkeit meßbar ist, durch Zugabe des nichtleitenden Stoffes B aber der Leitfähigkeitssprung auftritt.

Überraschend ergibt sich auch oft eine Verbesserung der mechanischen Eigenschaften. Dies ist vor allem in Konzentrationsbereichen, die eine besonders hohe Leitfähigkeit ergeben, und bei Verwendung von intrinsisch leitfähigen Polymeren als Stoff A in Kombination mit einem geeigneten Stoff B in steifen bzw. wärmeformbeständigen Polymeren spürbar.

Als Stoff A kommen Ruße ("Leitruß") mit einer spezifischen Oberfläche von > 80 m²/g oder pulverförmige, vorzugsweise dispergierbare intrinsisch leitfähige Polymere in komplexierter Form infrage, die in der Polymermatrix eine Teilchengröße von ≤ 1 µm, bevorzugt < 500 nm aufweisen. Geeignete intrinsisch leitfähige Polymere sind z.B. Polyacetylen, Polypyrrol, Polyphenylene, Polythiophene Polyphthalocyanine und andere Polymere mit konjugierten π-Elektronensystemen, welche in bekannter Weise mit Säuren oder durch Oxydation leitfähig gemacht (komplexiert) sind. Besonders bevorzugt sind komplexierte Polyaniline.

Als Stoff B kann man nahezu alle Pigmente, Füllstoffe und anderen nichtleitenden, teilchenförmigen, unter Verarbeitungsbedingungen nicht schmelzbaren oder in der Polymermatrix unlöslichen Stoffe mit einer durchschnittlichen Teilchengröße von etwa 50 µm abwärts verwenden. Vorzugsweise ist die Teilchengröße des Stoffes B jeweils größer als die des Stoffes A. Einschränkungen bezüglich der chemischen Zusammensetzung der Teilchen sind bisher nicht gefunden worden. So kann man Titandioxid, organische oder anorganische Pigmente, Füllstoffe wie Kieselsäuren, Kreide, Talkum u.a., aber auch die neutralen (kompensierten), nichtleitenden Formen der intrinsisch leitfähigen Polymeren einsetzen.

Als Matrixpolymere eignen sich alle Polymere, seien es Thermoplaste, Duromere oder Lacke. Die Erfindung kann auch in Polymerblends Anwendung finden, besonders erfolgreich in solchen entsprechend der Lehre der EP-A-168 620.

Das Volumen-Verhältnis zwischen den Stoffen A und B kann in weiten Bereichen zwischen etwa 20:1 und 1:20 variiert werden und bedarf im Einzelfall der Optimierung. Bevorzugt ist die Kombination A mit B im Verhältnis von 2:1 bis 10:1.

Die Beispiele zeigen eine repräsentative Auswahl erfolgreicher Experimente sowie entsprechende Vergleichsversuche. Die Einarbeitung der Stoffe A und B kann nach konventionellen, an sich bekannten Verfahren erfolgen; bevorzugt ist es, die Stoffe A und B vor Einarbeitung in das Matrixpolymer vorzumischen.

Eine Erklärung für die erfindungsgemäß erzielten überraschenden Effekte läßt sich noch nicht geben. Im Lichte der "Perkolationstheorie" sind sie gänzlich unverständlich, ja geradezu unzulässig. Im Zusammenhang mit den neueren Vorstellungen (B. Weßling, a.a.O.) vom Leitfähigkeitssprung als Phasenübergang zwischen dispergiertem und flokkuliertem Zustand sind die Effekte ebenfalls nicht verständlich, aber immerhin unter Einschluß weiterer, bisher unbewiesener Annahmen zulässig.

In den folgenden Beispielen wurden die erwähnten Stoffe A und B in konventionelle Polymersysteme eingearbeitet. Bei PE handelt es sich um LUPOLEN® 2424H (BASF AG). PETG ist ein Copolyester der Fa. Eastman Kodak. Der Lack (Beispiele 15 bis 18) ist ein lösungsmittelhaltiger PVC/VA-Copolymer-Lack.

Die Einarbeitung der Zusatzstoffe in PE und PETG erfolgte in einem Innenmischer nach Vormischung der Stoffe A und B in einem Labormischer. Die Mischansätze wurden heiß verpreßt; die spezifische Leitfähigkeit wurde an den Preßlingen mittels Vierpunktmeßtechnik bestimmt.

Die Einarbeitung der Zusatzstoffe in das Lacksystem erfolgte nach Vormischung in einer Kugelmühle. Der flüssige Lack wurde auf einen Träger aufgestrichen und getrocknet.

Alle Prozentangaben sind in Gewichtsprozent.

In der Tabelle bedeuten:
- Ketjenblack® EC =: Leitruß, Oberfläche ca. 800 m²/g.
- Polyanilin-pTs =: mit p-Toluolsulfonsäure komplexiertes Polyanilin.

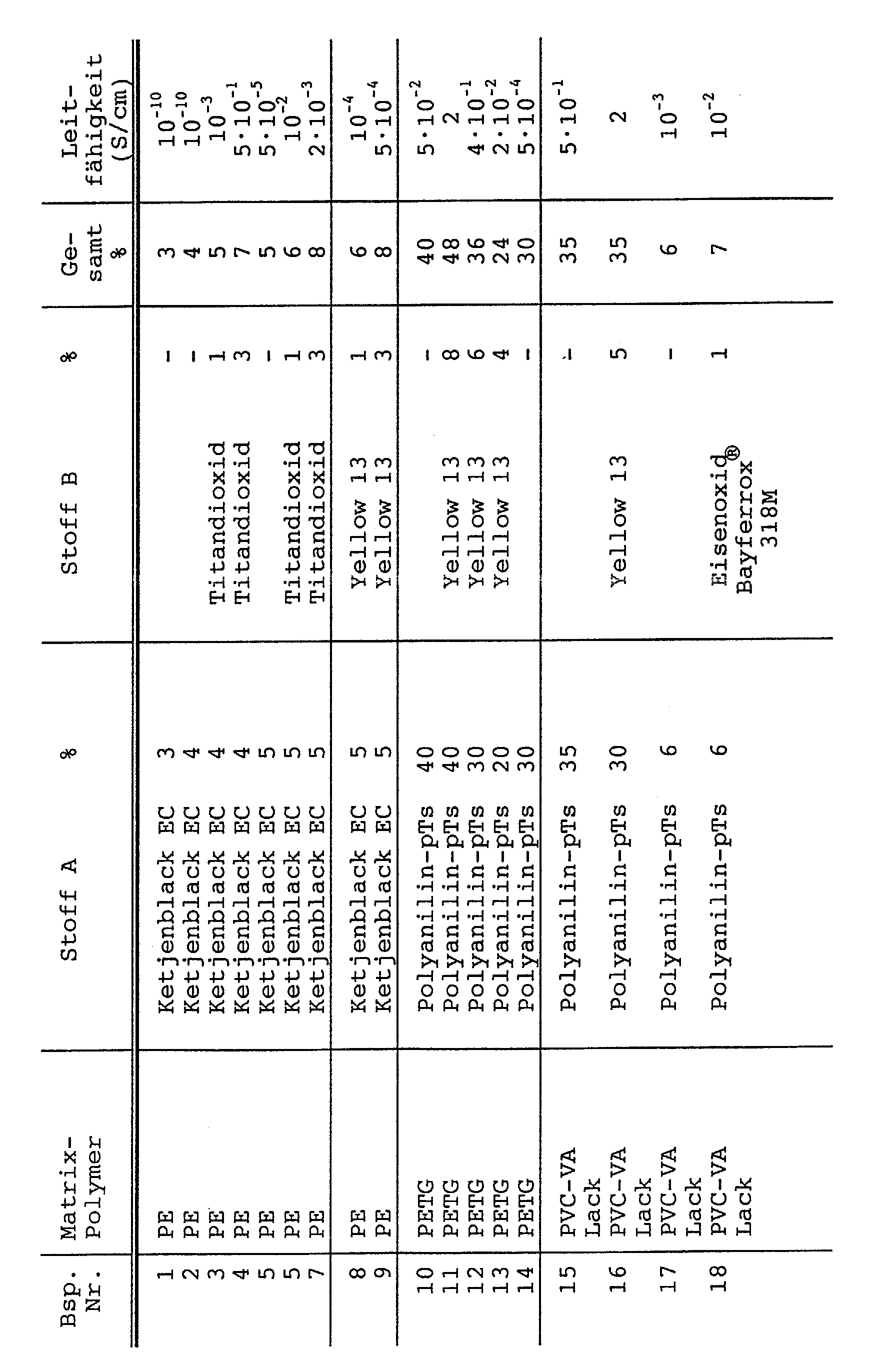

## Patentansprüche

1. Verwendung eines feinteiligen nicht-leitenden Stoffes mit einer durchschnittlichen Teilchengröße < 50 µm, welcher unter den Verarbeitungsbedingungen nicht schmelzbar und im Matrixpolymer unlöslich ist, zur Erhöhung der Leitfähigkeit einer antistatisch bzw. leitfähig ausgerüsteten polymeren Zusammensetzung aus mindestens einem nicht leitenden Matrixpolymer und einem elektrisch leitfähigen Zusatzstoff, nämlich Leitruß mit einer BET-Oberfläche > 80 m²/g und/oder einem intrinsisch leitfähigen organischen Polymer in komplexierter Form.

2. Verwendung nach Anspruch 1, dadurch gekennzeichnet, daß man als leitfähigen Stoff komplexiertes Polyanilin einsetzt.

3. Verwendung nach Anspruch 1 oder 2, dadurch gekennzeichnet, daß man als nicht-leitenden Stoff anorganische oder organische, elektrisch nicht leitende Füllstoffe oder Pigmente einsetzt.

4. Verwendung nach Anspruch 3, dadurch gekennzeichnet, daß man als anorganisches Pigment Titandioxid einsetzt.

5. Verwendung nach Anspruch 3, dadurch gekennzeichnet, daß man als organisches Pigment Pigment Yellow 13 einsetzt.

6. Verwendung nach Anspruch 1 bis 5, dadurch gekennzeichnet, daß man die leitfähigen und die nicht-leitfähigen Zusatzstoffe im Gewichts-Verhältnis 20:1 bis 1:20 einsetzt.

7. Verwendung nach Anspruch 6, dadurch gekennzeichnet, daß man die Zusatzstoffe im Gewichts-Verhältnis 2:1 bis 10:1 einsetzt.

8. Verwendung nach den Ansprüchen 1 bis 7, dadurch gekennzeichnet, daß man die Zusatzstoffe vor der Einarbeitung in das Matrixpolymer vormischt.

## Claims

1. Use of a finely particulate non-conductive substance having an average particle size < 50 µm, which does not melt under the processing conditions and is insoluble in the matrix polymer, for the purpose of increasing the conductivity of an antistatic or conductive polymer composition which consists of at least one non-conductive matrix polymer and an electrically conductive additive, specifically conductive carbon black having a BET surface area > 80 m²/g and/or an intrinsically conductive organic polymer in complexed form.

2. Use according to Claim 1, characterized in that the conductive substance used is complexed polyaniline.

3. Use according to Claim 1 or 2, characterized in that the non-conductive substance used is inorganic or organic, electrically non-conductive fillers or pigments.

4. Use according to Claim 3, characterized in that the inorganic pigment used is titanium dioxide.

5. Use according to Claim 3, characterized in that the organic pigment used is Pigment Yellow 13.

6. Use according to Claims 1 to 5, characterized in that the conductive and non-conductive additives are used in a weight ratio of 20:1 to 1:20.

7. Use according to Claim 6, characterized in that the additives are used in a weight ratio of 2:1 to 10:1.

8. Use according to Claims 1 to 7, characterized in that the additives are premixed before being incorporated into the matrix polymer.

## Revendications

1. Utilisation d'une matière non-conductrice à fines particules avec des particules de taille moyenne < 50 µm, non fusible dans les conditions de traitement et non soluble dans le polymère matriciel, pour augmenter la conductibilité d'une composition polymère rendue antistatique ou conductrice, d'au moins un polymère matriciel non conducteur et d'un additif électroconducteur, à savoir une suie conductrice de surface BET > 80 m²/g et/ou un polymère organique intrinsèquement conducteur sous forme complexée.

2. Utilisation selon la revendication 1, caractérisée en ce que l'on utilise la polyaniline complexée comme matière conductrice.

3. Utilisation selon la revendication 1 ou 2, caractérisée en ce que l'on utilise des composés de charge ou des pigments non électroconducteurs inorganiques ou organiques, comme matière non conductrice.

4. Utilisation selon la revendication 3, caractérisée en ce que l'on utilise le dioxyde de titane comme pigment inorganique.

5. Utilisation selon la revendication 3, caractérisée en ce que l'on utilise le pigment Yellow 13 comme pigment organique.

6. Utilisation selon les revendications 1 à 5, caractérisée en ce que l'on utilise les additifs conducteurs et les additifs non-conducteurs dans une proportion de 20:1 à 1:20 en poids.

7. Utilisation selon la revendication 6, caractérisée en ce que l'on utilise les additifs dans une proportion de 2:1 à 10:1 en poids.

8. Utilisation selon les revendications 1 à 7, caractérisée en ce que l'on pré-mélange les additifs avant de les introduire dans le polymère matriciel.
